# EUROPEAN PATENT APPLICATION

(11) **EP 3 739 665 A1**
(43) Date of publication of application: **18.11.2020**
(21) Application number: 19174424.2
(22) Date of filing: 14.05.2019
(51) Int. Cl.: H01M 2/12

(54) **SAFETY VALVE WITH DEBONDING FUNCTION**

(71) Applicant: Nitto Belgium NV, 3600 Genk (BE)
(72) Inventor: The designation of the inventor has not yet been filed
(74) Representative: Grünecker Patent- und Rechtsanwälte PartG mbB

(57) **Abstract**

The present invention relates to a safety valve for an electrochemical device casing, comprising: a gas-permeable membrane; a protective housing provided over the gas-permeable membrane; and a pressure-sensitive adhesive layer provided at least below the gas-permeable membrane, while leaving a portion of gas-permeable membrane exposed at the underside thereof; wherein the pressure-sensitive adhesive layer is configured to debond when a pressure exerted on the underside of the exposed portion exceeds a predetermined threshold and/or when a temperature below the exposed portion of the gas-permeable membrane exceeds a predetermined threshold. Further disclosed are electrochemical devices comprising said safety valve and uses thereof.

## Description

### FIELD OF INVENTION

The invention relates to safety valve for use in casings of electrochemical devices such as battery packs or fuel cells, for example. In addition, the present invention relates to electrochemical devices comprising said safety valve.

### BACKGROUND OF THE INVENTION

Many electrochemical devices require a casing equipped with a safety mechanism which is capable of compensating fluctuations in the internal pressure within the casing to suppress bulging or deformation by continuous air exchange with the environment and/or which is capable of emergency degassing if the pressure or temperature is excessively increased. The latter function is especially important for batteries (such as lithium ion batteries used in automotive applications, for example) or other electrochemical devices prone to thermal runaway phenomena, wherein the device heats up sharply due to the occurrence of a variety of exothermic reactions, catches fire and may even burst or explode (due to excessive internal pressure caused by gas release, for example). These effects are further pronounced in battery packs, wherein the thermal runaway of a single cell may promote damage, thermal runaway and/or malfunction of neighboring cells.

It is known to provide electrochemical device housings with pressure compensation devices, which comprise membranes or films having a certain gas permeability to enable continuous air exchange but also protect the interior of the housing from penetrating dirt and water. For example, US 2013/0032219 A1 discloses a device using a gas-permeable membrane, typically composed of porous PTFE, which at least partly opens a gas-through opening for bursting protection, thereby combining continuous pressure compensation and emergency degassing in a single unit. However, said configuration is disadvantageous since after an abrupt pressure increase, the membrane is destroyed and must be replaced to perform both functions. US 2018/0292020 A1 addresses this problem by using a nonwoven fabric material as gas-permeable membrane to increase its air permeability, while using separate sealing lips which lift off the sealing surface if the internal pressure reaches a critical threshold (i.e. during emergency degassing). However, the method of producing said pressure compensation device is elaborate since it is difficult to provide sealing lips with a geometry which both conforms to the casing and lift off at a predetermined pressure. In addition, the membrane must be specifically treated to prevent liquids (e.g. water, oil) and dirt from penetrating from outside, for example by laminating a suberabsorbent nonvowen fabric layer to a microfiber-nonvowen fabric layer. Furthermore, the use of a superabsorbent layer tends to decrease the gas permeation properties over time and must be replaced once the liquid absorption capacity has been reached. WO 2018/183804 A1 discloses a vent assembly comprising an umbrella valve for emergency degassing.

However, it still remains desirable to provide a simple safety valve which overcomes the above disadvantages, which does not rely upon complex geometries of one or more of its constituents, and which may be produced inexpensively and in a straightforward manner.

### SUMMARY OF THE INVENTION

The present invention solves these objects with the subject matter of the claims as defined herein. Further advantages of the present invention will be further explained in detail in the section below.

In general, the present invention relates to a safety valve for an electrochemical device casing, comprising: a gas-permeable membrane; a protective housing provided over the gas-permeable membrane; and a pressure-sensitive adhesive layer provided at least below the gas-permeable membrane, while leaving a portion of gas-permeable membrane exposed at the underside thereof; wherein the pressure-sensitive adhesive layer is configured to debond when a pressure exerted on the underside of the exposed portion exceeds a predetermined threshold and/or when a temperature below the exposed portion of the gas-permeable membrane exceeds a predetermined threshold.

Other aspects of the present invention relate to the use of the aforementioned safety valve for compensating an internal pressure in an electrochemical device casing, and to electrochemical devices comprising a casing with at least one opening, wherein the aforementioned safety valve is adhered to the outside portion of the casing so as to cover the opening.

Preferred embodiments of, as well as other aspects of the present invention are described in the following description and the claims.

### BRIEF DESCRIPTION OF THE DRAWING

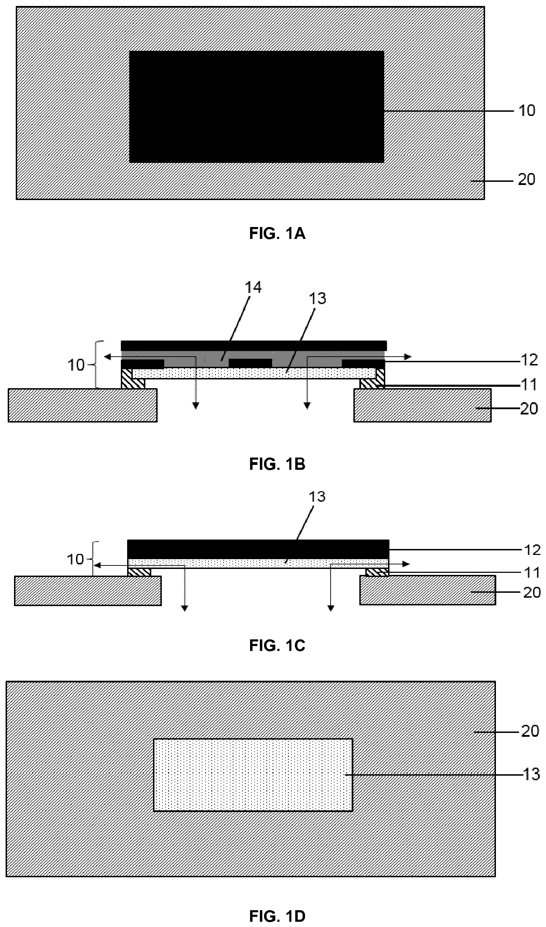

FIG. 1A schematically illustrates the top view of an electrochemical device casing, onto which an exemplary safety valve according to the present invention has been adhered.
FIG. 1B schematically illustrates the cross section of an electrochemical device casing, onto which an exemplary safety valve according to one embodiment of the present invention has been adhered.
FIG. 1C schematically illustrates the cross section of an electrochemical device casing, onto which an exemplary safety valve according to an alternative embodiment the present invention has been adhered.
FIG. 1D schematically illustrates the bottom view of an electrochemical device casing, onto which an exemplary safety valve according to the present invention has been adhered.

### DETAILED DESCRIPTION OF THE INVENTION

For a more complete understanding of the present invention, reference is now made to the following description of the illustrative embodiments thereof:

### Safety valves for pressure compensation in electrochemical device casings

In a first embodiment, the present invention relates to a safety valve for an electrochemical device casing, comprising: a gas-permeable membrane; a protective housing provided over the gas-permeable membrane; and a pressure-sensitive adhesive layer provided at least below the gas-permeable membrane, while leaving a portion of gas-permeable membrane exposed at the underside thereof; wherein the pressure-sensitive adhesive layer is configured to debond when a pressure exerted on the underside of the exposed portion exceeds a predetermined threshold and/or when a temperature below the exposed portion of the gas-permeable membrane exceeds a predetermined threshold. Upon adhering the safety valve according to the present invention to the outside portion of the casing so as to cover an opening in an electrochemical device casing, the gas-permeable membrane compensates for minor internal pressure fluctuations within the electrochemical device casing, thereby suppressing bulging or deformation, while the debonding mechanism provides for a gas-through opening in the event of sudden and/or excessive pressure or temperature increased (such as during a thermal runaway event), thus ensuring effective emergency degassing. The safety valve according to the present invention combines both functions, and may be manufactured in a simple and inexpensive manner. In addition, ingress of liquids (e.g. water or oil) and dirt or other particles into the device casing is reliably prevented during normal operation of the electrochemical device.

Without being limited thereto, an exemplary embodiment of a safety valve according to the present invention, adhered over an opening of an electrochemical device casing is illustrated in FIGS. 1A to 1D.

FIG. 1A schematically illustrates the top view of an electrochemical device casing (20), onto which an exemplary safety valve (10) according to the present invention has been adhered, while FIG. 1D illustrates the bottom view of said electrochemical device casing (view from inside the casing), showing the exposed portion of the gas-permeable membrane (13) visible through the opening of the casing (20).

In general, the safety valve (10) is adhered to the outside portion of the casing (20) via the pressure-sensitive adhesive (PSA) layer (11) so as to entirely cover the opening. It is also preferred that the PSA layer completely surrounds the opening (i.e. without any gaps) in order to prevent ingress of fluids or particles. In case the PSA layer does not completely surround the opening, the safety valve may alternatively include a seal element configured to create a gas- and liquid-tight seal between the safety valve and the electrochemical device casing. The material used for such a seal element is not particularly limited and may be selected from sealing materials known in the art, including rubber materials (e.g. silicone rubber, EPDM rubber, nitrile butadiene rubber) and the like, which may be mounted to the safety valve by molding (e.g. injection molding), for example.

The pressure-sensitive adhesive layer is generally provided at least below the gas-permeable membrane, while leaving a portion of gas-permeable membrane exposed at the underside thereof. The shape and constitution of the protective housing provided on top of the gas-permeable membrane is not particularly limited as long as it is capable of protecting the gas-permeable membrane from mechanical damage. In embodiments, it may be preferred that at least parts of the protective housing are in direct contact with the gas-permeable membrane. Exemplary protective housing shapes include cylindrical shapes or dome shapes. However, in a preferred embodiment in terms of ease of manufacture, the protective housing has a flat, sheet-like shape. In further embodiments, the protective housing may include a carrier element in the bottom portion, configured to firmly support the gas-permeable membrane. Such a carrier element may be a clamping mechanism or a groove structure in the bottom portion, into which the membrane is set.

The exposed portion of the gas-permeable membrane ensures gaseous communication between the inside and the outside of the casing. In this context, "outside of the casing" is understood as a closed or open cavity within the protective housing of the safety valve and/or the environment (outside the safety valve).

However, it is preferred that the safety valve enables gaseous communication between the inside of the electrochemical device casing and the environment. While not being limited thereto, two examples (which may also be combined) of how gaseous communication may be established are illustrated in FIGS. 1B and 1C.

FIG. 1B shows the side view (in cross section) of an exemplary safety valve (10A) according to one embodiment of the present invention, wherein pressure-sensitive adhesive layer (11) is provided both on the outer sides and below the gas-permeable membrane (13), while only leaving a portion of gas-permeable membrane exposed at the underside (i.e. the side facing the inside of the casing (20)) thereof. The protective housing (12A) comprises a channel structure (14) including vent holes on the sides of the protective housing (12A) above the adhesive layer level so as to establish gaseous communication between the exposed portion at the underside of the gas-permeable membrane (13) and the environment.

FIG. 1C shows the side view (in cross section) of an exemplary safety valve (10B) according to another embodiment of the present invention, wherein the edges of the gas-permeable membrane (13) are at least partly exposed to the environment above the adhesive layer so as to establish gaseous communication between the exposed portion at the underside of the gas-permeable membrane (13) and the environment. Said embodiment has the advantage that it may be produced in an extremely simple and straightforward manner since no complex geometries are required for the protective housing.

It is understood that the embodiments of FIG. 1B and FIG 1C may be appropriately combined.

In general, the gas-permeable membrane is preferably composed of a porous polymer material, further preferably a fluoropolymer material, especially preferably porous polytetrafluoroethylene (PTFE). Suitable commercially available materials include, but are not limited to, stretched porous PTFE membranes from the TEMISH™ range, available from Nitto Denko Corporation. The thickness of the gas-permeable membrane is not particularly limited and may be suitably selected by the skilled artisan. While not being limited thereto, preferred thicknesses may be in the range of from 10 µm to 5 mm, such as from 50 µm to 1 mm.

The protective housing can be constructed of a variety of different materials and combinations (including plastics, composites and metals, for example), but is typically formed of molded plastic.

In general, it may be preferred that the predetermined threshold of the internal pressure is in the range of from 1 to 100 kPa, further preferably from 2 to 50 kPa, especially preferably from 5 to 30 kPa. The predetermined threshold of the internal temperature is preferably in the range of from 100 to 450°C, further preferably from 200 to 430°C, especially preferably from 300 to 400°C.

The pressure-sensitive adhesive layer is configured to debond when the predetermined threshold of the internal pressure and/or temperature is achieved, thereby forming a gas through-opening. A pressure-triggered debonding function may be achieved by suitably adjusting the peel strength of the adhesive layer, for example, by appropriately selecting the peel strength of the adhesive layer material in dependence of the adhesive layer area and the materials used for the electrochemical device casing and the safety valve housing (i.e. the bottom part of the safety valve housing). Temperature-triggered debonding may be achieved by selecting the adhesive layer material from debond-on-command adhesives known in the art. Examples thereof include, but are not limited to adhesives comprising thermally expandable agents (e.g. physical foaming agents or chemical foaming agents, such as those disclosed in EP 2 463 347 A2, for example; non-foaming thermally expandable agents, including, but not limited to expandable graphite, as disclosed in Kishi et al., Journal of the Adhesion Society of Japan, vol. 42, no. 9, pp. 356-363, 2006, for example), chemical degrading agents (such as those disclosed in WO 2004/087829 A2, FR 2 837 114 A1, EP 2 519 596 A1, for example), release-on-demand adhesive systems based on microcapsules and/or microspheres, adhesives with thermally modifiable crosslinks (e.g. adhesives capable of thermally reversible Diels-Alder crosslinking or the like, such as those disclosed in Aubert et al., Assembly, vol. 46, no. 2, pp. 46-48, 2003; Aubert, Journal of Adhesion, vol. 79, no. 6, pp. 609-616, 2003, for example), and combinations thereof. Alternative debond-on-demand adhesives include pressure sensitive adhesives (PSA), wherein the adhesion strength of the substance is reduced via thermally induced post-curing. Alternatively, or in addition, additional functional layers may be added to modify and achieve the desired debondability. Examples of such additional functional layers include a layer comprising a different adhesive (according to EP 2 463 347 A2, for example), shape memory polymer layers (such as those disclosed in US 2010/0316845 A1, for example) and peel-assisting layers (such as those disclosed in JP 2009-120-808 A1, optionally in combination with a viscoelastic substrate layer as disclosed in EP 2 204 425 A1). The debonding properties may be further adjusted by altering the interface between the substrate (i.e. the casing surface) and the adhesive layer (according to FR 2 852 965 or EP 0 904 329 B1, for example).

It is emphasized that the debonding of the adhesive layer need not be triggered directly by the temperature and/or pressure conditions present in the electrochemical device casing, but may be also induced indirectly upon sensing the pressure and/or temperature conditions in the device casing.

For example, in embodiments, the safety valve may be equipped with a control system comprising an inline camera, an airflow sensor and/or a temperature sensor providing information on the conditions (e.g. pressure and/or temperature) in the electrochemical device casing and/or a cavity of the protective housing, depending on the position in which it is mounted, and identifying peaks or anomalies in the pressure and/or temperature conditions. In combination, it may be preferable to incorporate into the pressure-sensitive adhesive layer an adhesive capable of debonding on command by applying electrical voltage, which - when combined with a current source in contact with the adhesive layer, advantageously allows formation of gas-through openings at an early stage and may prevent burst events leading to potential damage. Examples of such adhesives include those disclosed in US 6,620,308 B2; WO 2007/018239 A1; WO 2008/150227 A1; US 7,968,188 B2; Haydon, D.W., Assembly Automation, vol. 22, no. 4, pp. 326-329, 2002; Leijonmarck, S., et al., Journal of the Electrochemical Society, vol.158, no.10, pp. P109-P114, 2011; and Leijonmarck, S., et al., International Journal of Adhesion and Adhesives, vol. 32, pp. 39-45, 2012; for example. As an alternative to electricity-induced debonding, a combination of an UV-light source and a UV-sensitive debond-on-demand adhesive layer may be incorporated into the safety valve, for example.

The thickness of the pressure-sensitive adhesive layers is not particularly limited and may be suitably selected by the skilled artisan depending on the type of debond-on-demand adhesive uses. While not being limited thereto, preferred thicknesses may range of from 1 µm to 20 mm, such as from 10 µm to 10 mm.

In embodiments, the safety valve according to the present invention may further comprise a fixation means which maintains connection of the safety valve to the electrochemical device casing even under conditions when the pressure exerted on the underside of the exposed portion exceeds the predetermined threshold and/or when the temperature below the exposed portion of the gas-permeable membrane exceeds the predetermined threshold. Such fixation means may be configured to provide a reversible flap mechanism in the case of emergency degassing, returning to the closed state if the temperature and/or pressure conditions fall below the predetermined threshold(s). Suitable fixation means may include mechanical fixation means (e.g. clip- or screw-type, female (or male) connector fitted to a male (or female) connector provided in the electrochemical device casing, bayonet connector) or chemical fixation means. As an example of the latter, one or more further adhesive compositions may be added to the pressure-sensitive adhesive layer or in terms of (a) separate pressure-sensitive adhesive layer(s), which is/are selected so as to maintain bonding when the pressure exerted on the underside of the exposed portion exceeds the predetermined threshold and/or when the temperature below the exposed portion of the gas-permeable membrane exceeds the predetermined threshold.

As will be apparent to the skilled artisan, the safety valves according to the present invention advantageously do involve sophisticated part geometries and may be therefore produced in a particularly simple and inexpensive manner.

### Uses of the Safety Valves and Electrochemical Devices

In a second embodiment, the present invention relates to an electrochemical device comprising a casing with at least one opening, wherein a safety valve according to the first embodiment is adhered to the outside portion of the casing so as to cover the opening.

The most effective use of safety valves according to the present invention is made in combination with electrochemical devices prone to sudden pressure and/or temperature increase. Therefore, the electrochemical device is preferably a device prone to thermal runaway phenomena, such as a battery (including, but not limited to a lithium-ion battery) or a fuel cell, and especially preferably a stack of batteries or fuel cells provided in a casing, onto which a safety valve according to the first embodiment is adhered. Such battery and fuel cell stacks may be employed in automotive applications, for example.

In such electrochemical devices, the casing material is preferably selected from a plastic material, a metal or a metallic alloy. Metals (such as aluminum, for example) or metallic alloys are particularly preferred in terms of light weight and structural strength.

In a third embodiment, the present invention relates to the use of a safety valve according to the first embodiment for compensating an internal pressure in an electrochemical device.

The electrochemical device may be selected from any electrochemical device, wherein compensation for internal pressure fluctuations and emergency degassing is required.

It will be understood that the preferred features of the first to third embodiments may be freely combined in any combination, except for combinations where at least some of the features are mutually exclusive.

Once given the above disclosure, many other features, modifications, and improvements will become apparent to the skilled artisan.

### REFERENCE NUMERALS

- 10: Safety valve
- 11: Pressure-sensitive adhesive layer
- 12, 12A, 12B: Protective housing
- 13: Gas-permeable membrane
- 14: Channel structure
- 20: Electrochemical device casing

## Claims

1. Safety valve for an electrochemical device casing, comprising:
a gas-permeable membrane;
a protective housing provided over the gas-permeable membrane; and
a pressure-sensitive adhesive layer provided at least below the gas-permeable membrane, while leaving a portion of gas-permeable membrane exposed at the underside thereof;
wherein the pressure-sensitive adhesive layer is configured to debond when a pressure exerted on the underside of the exposed portion exceeds a predetermined threshold and/or when a temperature below the exposed portion of the gas-permeable membrane exceeds a predetermined threshold.

2. The safety valve for an electrochemical device casing according to claim 1, wherein the gas-permeable membrane comprises a porous fluoropolymer material, preferably porous polytetrafluoroethylene (PTFE).

3. The safety valve for an electrochemical device casing according to any of claims 1 or 2, wherein the predetermined threshold of the pressure exerted on the underside of the exposed portion is in the range of from 5 to 30 kPa.

4. The safety valve for an electrochemical device casing according to any of claims 1 to 3, wherein the predetermined threshold of the temperature below the exposed portion is in the range of from 300 to 400°C.

5. The safety valve for an electrochemical device casing according to any of claims 1 to 4, wherein the protective housing is made of a plastic material.

6. The safety valve for an electrochemical device casing according to any of claims 1 to 5, wherein the protective housing is in direct contact with the gas-permeable membrane.

7. The safety valve for an electrochemical device casing according to any of claims 1 to 6, wherein the edges of the gas-permeable membrane are at least partly exposed to the environment above the adhesive layer so as to establish gaseous communication between the exposed portion at the underside of the gas-permeable membrane and the environment.

8. The safety valve for an electrochemical device casing according to any of claims 1 to 7, wherein the protective housing comprises vent holes above the adhesive layer so as to establish gaseous communication between the exposed portion at the underside of the gas-permeable membrane and the environment.

9. The safety valve for an electrochemical device casing according to any of claims 1 to 8, wherein the pressure-sensitive adhesive layer is formed of a debond-on-demand adhesive comprising thermally expandable agents or chemical degrading agents.

10. The safety valve for an electrochemical device casing according to any of claims 1 to 9, wherein the pressure-sensitive adhesive layer additionally comprises one or more adhesive compositions configured to maintain bonding when the pressure exerted on the underside of the exposed portion exceeds the predetermined threshold and/or when the temperature below the exposed portion of the gas-permeable membrane exceeds the predetermined threshold.

11. The safety valve for an electrochemical device casing according to any of claims 1 to 10, wherein the protective housing has a sheet-like flat shape.

12. Use of a safety valve according to claims 1 to 11 for compensating an internal pressure in an electrochemical device casing.

13. Electrochemical device comprising a casing with at least one opening, wherein a safety valve according to claims 1 to 11 is adhered to the outside portion of the casing so as to cover the opening.

14. Electrochemical device according to claim 13, wherein the casing material is selected from a plastic material, a metal or a metallic alloy, preferably a metal or metallic alloy.

15. Electrochemical device according to claim 14, wherein the electrochemical device is a battery or a fuel cell.
